# EUROPÄISCHE PATENTSCHRIFT

(11) **EP 2 222 449 B1**
(45) Veröffentlichungstag und Bekanntmachung des Hinweises auf die Patenterteilung: **30.09.2015**
(21) Anmeldenummer: 08843336.2
(22) Anmeldetag: 11.11.2008
(51) Int. Cl.: B29C 45/16

(54) **MEHRKOMPONENTIGES SPRITZGUSSTEIL MIT STOFFSCHLÜSSIGER ABDICHTUNG**
MULTI-COMPONENT INJECTION MOLDED PART HAVING A BONDED SEAL
PIÈCE MOULÉE PAR INJECTION À PLUSIEURS COMPOSANTS PRÉSENTANT UNE ÉTANCHÉITÉ PAR LIAISON DE MATIÈRE

(30) Priorität: 14.12.2007 DE 102007060394
(43) Veröffentlichungstag der Anmeldung: 01.09.2010
(73) Patentinhaber: Robert Bosch GmbH, 70442 Stuttgart (DE)
(72) Erfinder: KRENZ, Guenter, 71711 Steinheim (DE); KOHLBERGER, Gerold, 87549 Rettenberg-freidorf (DE); ZIEGLER, Alexander, 73728 Esslingen (DE); BILLEPP, Bjoern, 73453 Abtsgmuend (DE); RATZEL, Wolf-Ingo, 70565 Stuttgart (DE); BEIERMEISTER, Bernd, 71711 Steinheim-kleinbottwar (DE); FRCEK, Zdenek, 37007 Kamenny Ujezd (CZ); STRAUS, Vaclav, 37008 Ceske Budejovice (CZ)
(86) Internationale Anmeldenummer: PCT/EP2008/065302
(87) Internationale Veröffentlichungsnummer: WO 2009/077269

(56) Entgegenhaltungen:
- EP-A- 1 348 875
- EP-A- 1 614 518
- EP-A- 1 755 133
- WO-A-2005/061203
- DE-A1- 3 642 246
- DE-A1- 3 820 814
- JP-A- 8 121 669
- JP-A- 56 114 985
- US-A- 5 153 052
- US-B1- 6 641 769
- US-B1- 6 793 870

## Beschreibung

### Stand der Technik

Die Erfindung geht aus von einem Verfahren zur Herstellung eines Spritzgussteils nach der Gattung des Hauptanspruchs.

Es sind schon Spritzgussteile aus der EP 1 614 518 A und DE 3642246 A bekannt, mit mindestens einem thermoplastischen Einlegeteil und einem auf das Einlegeteil gespritzten thermoplastischen Verbundelement, wobei das zumindest eine Einlegeteil an seiner Grenzfläche zum Verbundelement mehrere in Schmelzflussrichtung hintereinander angeordnete als Anschmelzspitzen ausgebildete Erhöhungen aufweist, die mit einer Höhe H1 in das Verbundelement hineinragen und jeweils einen verengten Querschnitt im Verbundelement mit einer Höhe H2 bilden. Das Spritzgussteil wird durch ein Spritzgießverfahren hergestellt, bei dem das Einlegeteil in einem Spritzgießwerkzeug angeordnet und daran ein Verbundelement angespritzt wird. Die Erhöhungen sollen von der Schmelze des Verbundelements angeschmolzen werden, so dass eine stoffschlüssige, fluiddichte Verbindung erreicht wird. Nachteilig ist jedoch, dass die Erhöhungen in der Regel scharfkantig senkrecht auf der Grenzfläche aufgebaut sind und nur teilweise oder gar nicht angeschmolzen werden, da den Erhöhungen oft nicht genügend Schmelzenergie aus der über die Erhöhung überströmenden Schmelze zur Verfügung steht. Die Erhöhung bildet eine Verengung für den Schmelzfluss, die jedoch für einen guten Antransport von Schmelze und einen guten Wärmeübergang von der Schmelze zur Erhöhung nicht ausreichend klein ist. Das Verhältnis der Höhe H2 zur Höhe H1 ist üblicherweise wesentlich größer als 1,5. Da die Erhöhungen nicht sicher anschmelzen, haben die bekannten Spritzgussteile mehere in Schmelzflussrichtung hintereinander angeordnete Erhöhungen, um eine Gasdichtheit der Verbindung zu erreichen. Diese Maßnahme benötigt aber viel Bauraum, der oft nicht zur Verfügung steht.

### Vorteile der Erfindung

Das erfindungsgemäße Verfahren zur Herstellung eines Spritzgussteils mit den kennzeichnenden Merkmalen des Hauptanspruchs hat demgegenüber den Vorteil, dass der Wärmeantransport zur Erhöhung und der direkte Wärmeübergang von der Schmelze zur Erhöhung verbessert und dadurch eine zuverlässige Anschmelzung der Erhöhung erreicht wird, indem die zumindest eine Erhöhung auf ihrer Schmelzflussanströmseite eine erste Schräge aufweist, wobei das Verhältnis der Höhe des verengten Querschnitts zur Höhe der Erhöhung im Bereich zwischen 0,6 und 0,9 liegt und wobei in Schmelzflussrichtung gesehen nur eine einzige Erhöhung vorgesehen ist. Insbesondere bei einem zylinderförmigen Spritzgussteil, dessen formschlüssige Verbindung zwischen dem Einlegeteil und dem Verbundelement gasdicht sein soll, reicht eine einzige ringförmige Erhöhung aus, wodurch gegenüber mehreren hintereinander angeordneten Erhöhungen Bauraum eingespart wird. Das Verbundbauteil kann auf diese Weise kleiner gebaut werden. Außerdem werden die Fertigungskosten für das Verbundbauteil verringert.

Die Verengung zwischen der Erhöhung des Einlegeteils und dem Spritzformwerkzeug mit der Höhe H2 ist gegenüber dem Stand der Technik verringert, so dass ein besserer Wärmeübergang besonders an der Spitze der Erhöhung erreicht ist. Durch die erfindungsgemäße Ausgestaltung wird eine kontinuierliche Zunahme der Stauwirkung der Erhöhung in Schmelzflussrichtung und ein Ausgleich der Stauwirkung bei einer von 90 Grad abweichenden Anströmrichtung der Schmelze erreicht. Außerdem werden strömungstote Bereiche und dadurch Gaseinschlüsse vermieden. Des weiteren wird die Oberfläche der Erhöhungen erfindungsgemäß vergrößert.

Durch die in den Unteransprüchen aufgeführten Maßnahmen sind vorteilhafte Weiterbildungen und Verbesserungen des im Hauptanspruch angegebenen Spritzgussteils möglich.

Gemäß einer ersten vorteilhaften Ausführung weist die erste Schräge der zumindest einen Erhöhung gegenüber einer auf der Grenzfläche des Einlegeteils senkrecht stehenden Achse einen Winkel zwischen 5 Grad und 45 Grad auf.

Gemäß einer zweiten vorteilhaften Ausführung weist die erste Schräge der zumindest einen Erhöhung gegenüber einer auf der Grenzfläche des Einlegeteils senkrecht stehenden Achse einen Winkel zwischen 15 Grad und 35 Grad auf, da der Kopf der Erhöhung bei dieser Ausgestaltung weniger Masse hat und dadurch leichter anschmilzt.

Sehr vorteilhaft ist es, wenn die Erhöhung auf ihrer Schmelzflussabströmseite eine zweite Schräge aufweist, da auf diese Weise die Strömungsführung verbessert wird und dadurch Gaseinschlüsse vermieden werden.

Auch vorteilhaft ist, wenn die zweite Schräge flacher verläuft als die erste Schräge.

Nach einer vorteilhaften Ausgestaltung weist die zweite Schräge der zumindest einen Erhöhung gegenüber einer auf der Grenzfläche des Einlegeteils senkrecht stehenden Achse einen Winkel zwischen 50 Grad und 75 Grad auf.

Außerdem vorteilhaft ist, wenn das Einlegeteil aus einem ersten Kunststoff und das Verbundelement aus einem zweiten Kunststoff hergestellt ist, wobei der erste Kunststoff und/oder der zweite Kunststoff einen kristallinen Anteil von mindestens 35% aufweisen. Beispielsweise ist der erste Kunststoff und/oder der zweite Kunststoff ein Polyamid, PPS, POM oder PEEK.

### Zeichnung

Ausführungsbeispiele der Erfindung sind in der Zeichnung vereinfacht dargestellt und in der nachfolgenden Beschreibung näher erläutert.
- Fig.1: zeigt im Schnitt ein Spritzgussteil in einem Spritzformwerkzeug während des Spritzvorgangs,
- Fig.2: im Schnitt ein Spritzgussteil nach dem Spritzvorgang,
- Fig.3: im Schnitt ein Spritzgussteil gemäß einem zweiten Ausführungsbeispiel,
- Fig.4: eine dreidimensionale Ansicht eines plattenförmigen Spritzgussteils
- Fig.5: eine dreidimensionale Ansicht eines zylinderförmigen Spritzgussteils

### Beschreibung der Ausführungsbeispiele

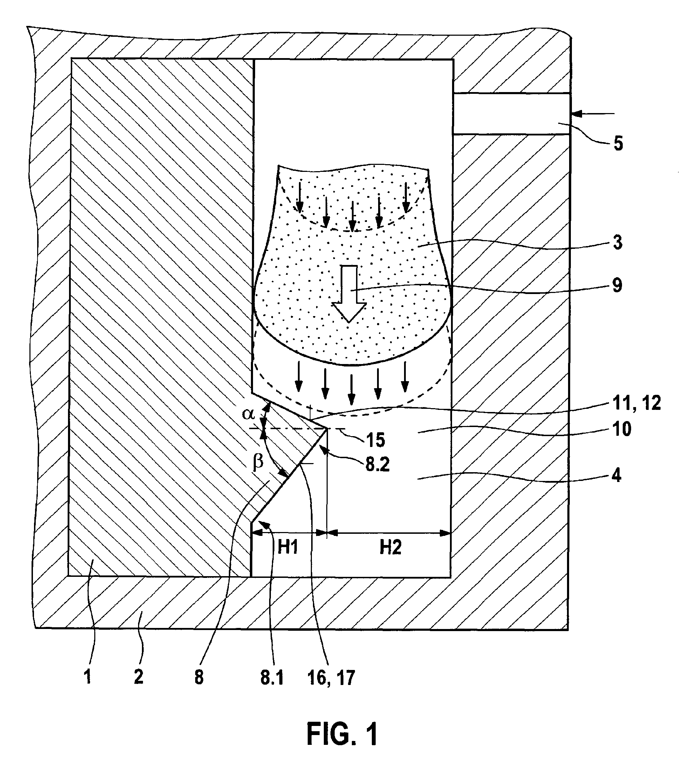

Fig.1 zeigt im Schnitt ein erfindungsgemäßes Spritzgussteil in einem Spritzformwerkzeug während eines Spritzvorgangs.

Bei der Herstellung von Kunststoffteilen, die aus mehreren Teilen oder Komponenten bestehen, wird eine gas- und/oder flüssigkeitsdichte Verbindung der Teile untereinander immer wichtiger, beispielsweise für öl- oder kraftstoffführende Teile. Bisherige Form- und Kraftschluss- Verbindungen haben den Nachteil, dass deren Dichtigkeit bei hohen Temperaturen durch den Abbau von Vorspannungskräften nicht gewährleistet ist. Für die hohen Dichtheitsanforderungen sind stoffschlüssige Verbindungen erforderlich, bei denen die dichtenden Flächen mindestens entlang einer Dichtlinie durchgängig zum Anschmelzen gebracht werden. Bei entsprechend hohem Diffusionswiderstand der Stoffe beider Verbundpartner ergibt sich dabei die erforderliche Barrierefunktion gegen die Penetration von Gasen und/oder Flüssigkeiten.

Bei der vorliegenden Erfindung wird die stoffschlüssige Verbindung durch ein Mehrkomponenten-Spritzgießverfahren hergestellt.

In einem Spritzvorgang wird an ein beliebiges festes Einlegeteil 1, das in ein an das Einlegeteil 1 angepasstes Spritzgießwerkzeug 2 eingesetzt ist, ein Verbundelement 3 angespritzt. Nach dem Spritzvorgang wird das fertige Spritzgussteil bestehend aus dem Einlegeteil 1 und dem daran angespritzen Verbundelement 3 aus dem Spritzgießwerkzeug 2 entnommen.

Zwischen dem Spritzgießwerkzeug 2 und dem Einlegeteil 1 ist an vorbestimmten Anspritzbereichen ein Hohlraum 4 vorgesehen, in den ein Kunststoff über mindestens eine Anspritzöffnung 5 im Spritzgießwerkzeug 2 eingespritzt wird. Der heiße, geschmolzene Kunststoff überströmt das Einlegeteil 1 in den Anspritzbereichen, wobei dieses dort lokal angeschmolzen wird. Durch die gemeinsame Abkühlung des Einlegeteils 1 und der eingespritzten, sich verfestigenden Schmelze, die das Verbundelement 3 bildet, ergibt sich eine feste, fluiddichte -beispielsweise gasdichte oder kraftstoffdichte- Verbindung zwischen beiden Partnern.

Der Hohlraum 4 stromab der Erhöhung 8 wird möglichst klein ausgelegt, um den erforderlichen Bauraum für das Spritzgussteil zu verringern.

Bei der Verwendung von höherkristallinen Kunststoffen, wie beispielsweise Polyamid, PPS, POM oder PEEK, für das Einlegeteil 1 und/oder das Verbundelement 3 besteht das Problem, dass für eine Verschweißung der beiden Verbundpartner nicht nur die lokale Erwärmung des Schweißpartners, also des Einlegeteils 1, auf Schmelztemperatur erfolgen, sondern auch noch die Schmelzwänne für die kristallinen, anzuschmelzenden Anteile des Einlegeteils 1 aufgebracht werden muss. Die Schmelzenthalpien erfordern mit zunehmendem kristallinen Anteil des anzuschmelzenden Kunststoffs ein Vielfaches an Energie im Vergleich zum Wärmebedarf, der für die reine Stofferwärmung auf Schmelztemperatur notwendig ist. Die für die Verschweißung des Einlegeteils 1 mit dem Verbundelement 3 notwendige Energie muss von der Schmelze an die zu verschweißende Stelle herantransportiert werden. Die Temperatur der Schmelze 3 darf jedoch eine vorbestimmte Temperatur nicht überschreiten, um diese nicht thermisch zu zersetzen oder zu schädigen.

Um die anzuschmelzende Fläche des Einlegeteils 1 auf einen kleinen Bereich oder kleine Bereiche zu begrenzen, weist das Einlegeteil 1 in den Anspritzbereichen eine Erhöhung 8 auf, die eine abdichtende Dichtlinie bildet. Nur der Bereich an dieser Dichtlinie ist zum Erreichen einer Fluiddichtigkeit anzuschmelzen. Die Erhöhung 8 weist einen dem Einlegeteil 1 zugewandten Fußbereich 8.1 und einen dem Fußbereich 8.1 abgewandten Kopfbereich 8.2 auf, der in einer Schmelzflussrichtung 9 gesehen schmaler ausgebildet ist als der Fußbereich 8.1. Die Erhöhung 8 beginnt im Kopfbereich 8.2 zuerst anzuschmelzen, da dort weniger Material vorhanden ist und ständig neue heiße Schmelze nachgespeist wird.

Die Erhöhung 8 hat eine senkrecht zur Oberfläche des Einlegeteils 1 gemessene Höhe H1 und bildet jeweils eine Verengung bzw. einen verengten Querschnitt 10 zwischen dem Spritzgießwerkzeug 2 und dem Einlegeteil 1. Die für die Schmelze zum Überströmen verbleibende Verengung 10 hat einen Querschnitt mit der Höhe H2.

Die Erhöhung 8 staut die Schmelze zunächst wie ein Damm auf, bis diese möglichst zeitgleich über deren gesamte Länge überströmt und dabei auch über die gesamte Länge angeschmolzen wird. Während des Überströmens wird die Erhöhung 8 teilweise abgeschmolzen also ein Teil des Materials abgetragen, so dass sich die ursprüngliche Höhe H1 der Erhöhung 8 verringert. Es ist zu vermeiden, dass die Erhöhung 8 lokal an nur einer Stelle von der Schmelze angeschmolzen und durchbrochen wird, da die Erhöhung 8 dann u.U. nicht über die gesamte Länge überströmt und somit nicht an jeder Stelle die zum Anschmelzen notwendige Schmelzwärme angeliefert wird. Daher muss die Erhöhung 8 in Schmelzflussrichtung gesehen eine Mindestwandstärke haben. Die Spitze der Erhöhung 8 darf also nicht zu spitz bzw. scharfkantig bzw. zu dünn im Kopfbereich 8.2 ausgeführt sein.

Erfindungsgemäß ist vorgesehen, dass die Erhöhung 8 auf ihrer Schmelzflussanströmseite 11 eine erste Schräge 12 aufweist. Auf diese Weise wird die Schmelze von dem Fußbereich 8.1 in den Kopfbereich 8.2 geleitet. Durch die gute Strömungsführung entsteht auf der Schmelzflussanströmseite 11 kein Totwassergebiet, so dass Gaseinschlüsse stromauf der Schmelzflussanströmseite 11 vermieden werden.

Die erste Schräge 12 der Erhöhung 8 weist gegenüber einer auf der Grenzfläche des Einlegeteils 1 senkrecht stehenden Achse 15 einen Winkel α zwischen 5 Grad und 45 Grad, vorzugsweise zwischen 15 Grad und 35 Grad, auf. Die erste Schräge 12 verläuft beispielsweise von dem Fußbereich 8.1 ausgehend bis in den Kopfbereich 8.2. Die Erhöhung 8 nach Fig. 1 ist durch die erste Schräge 12 und die zweite Schräge 17 im Querschnitt beispielsweise dreieckförmig oder zackenförmig ausgeführt. Die der Schmelze ausgesetzte Spitze der Erhöhung 8 kann einen Radius haben. Die erste Schräge 12 und/oder die zweite Schräge 17 können eben oder gewölbt ausgeführt sein.

Um die nötige Schmelzenergie aus der Schmelze an den Kopfbereich 8.2 der Erhöhung 8 zu transportieren, ist eine vorbestimmte Verengung 10 erforderlich, die allgemein durch das Verhältnis von der Höhe H2 der Verengung 10 zu der Höhe H1 der Erhöhung 8 definiert wird. Erfindungsgemäß liegt das Verhältnis von H2 zu H1 im Bereich zwischen 0,6 und 0,9.

Die Erhöhung 8 kann auf ihrer Schmelzflussabströmseite 16 eine zweite Schräge 17 aufweisen. Auf diese Weise wird ein Freistrahl bzw. ein Fließschatten mit Gaseinschlüssen vermieden. Die zweite Schräge 17 verläuft flacher als die erste Schräge 12, um auf der Abströmseite der Erhöhung eine Freistrahlbildung zu vermeiden. Gemäß einer Ausführung weist die zweite Schräge 17 der Erhöhung 8 gegenüber der Achse 15 einen Winkel β zwischen 50 Grad und 75 Grad auf.

Das Einlegeteil 1 ist aus einem ersten Kunststoff und das Verbundelement 3 aus einem zweiten Kunststoff hergestellt, wobei der erste Kunststoff und/oder der zweite Kunststoff einen kristallinen Anteil von mindestens 35% haben.

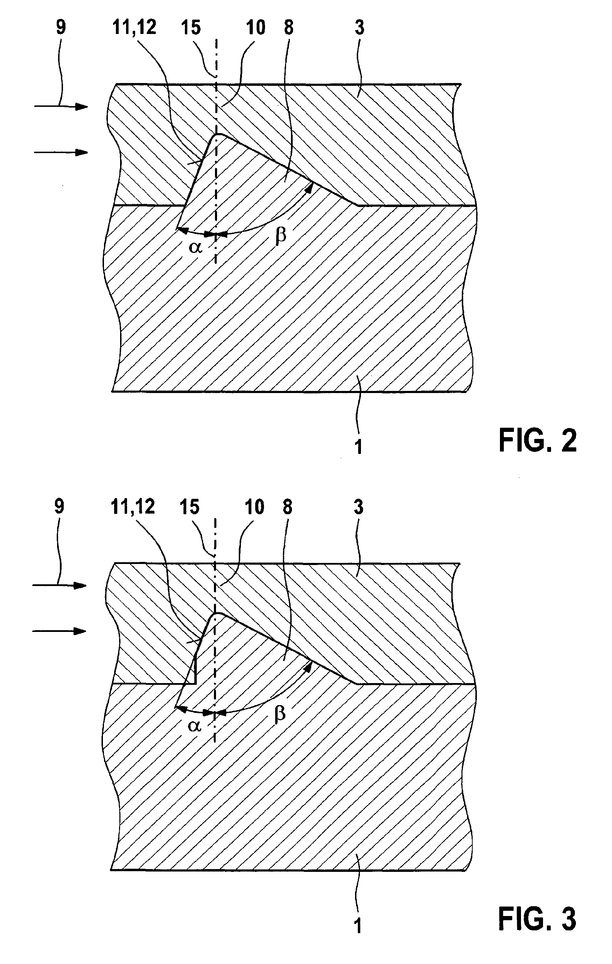

Fig.2 zeigt im Schnitt ein Spritzgussteil nach Fig.1 nach der Entnahme aus dem Spritzgießwerkzeug.

Bei dem Spritzgussteil nach Fig.2 sind die gegenüber dem Spritzgussteil nach Fig.1 gleichbleibenden oder gleichwirkenden Teile durch die gleichen Bezugszeichen gekennzeichnet.

Fig.3 zeigt im Schnitt ein Spritzgussteil gemäß einem zweiten Ausführungsbeispiel.

Bei dem Spritzgussteil nach Fig.3 sind die gegenüber dem Spritzgussteil nach Fig.1 und Fig.2 gleichbleibenden oder gleichwirkenden Teile durch die gleichen Bezugszeichen gekennzeichnet.

Das zweite Ausführungsbeispiel unterscheidet sich gegenüber dem ersten Ausführungsbeispiel nach Fig.1 und Fig.2 darin, dass die Schmelzflussanströmseite 11 im Fußbereich 8.1 etwa in Richtung der Achse 15 verläuft und anschließend in Richtung der Achse 15 gesehen zwischen dem Fußbereich 8.1 und dem Kopfbereich 8.2 die erste Schräge 12 ausgebildet ist.

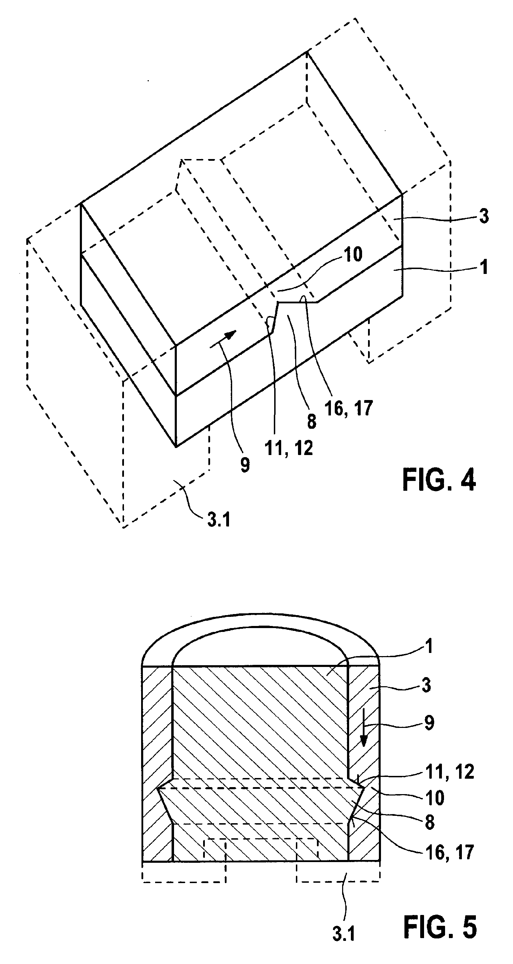

Fig.4 zeigt eine dreidimensionale Ansicht eines erfindungsgemäßen plattenförmigen Spritzgussteils.

Bei dem Spritzgussteil nach Fig.4 sind die gegenüber dem Spritzgussteil nach Fig.1 bis Fig.3 gleichbleibenden oder gleichwirkenden Teile durch die gleichen Bezugszeichen gekennzeichnet.

Bei einem zumindest abschnittsweise platten- oder scheibenförmigen Einlegeteil 1 ist eine Erhöhung 8 vorgesehen, die linienförmig, wellenförmig, mäanderformig oder zickzackförmig ausgebildet oder angeordnet ist . Zum Erreichen einer fluiddichten Verbindung zwischen dem Einlegeteil 1 und dem Verbundelement 3 reicht eine einzige Erhöhung 8 aus.

Zusätzlich zur stoffschlüssigen Verbindung kann eine formschlüssige Verbindung von Einlegeteil 1 und Verbundelement 3 vorgesehen sein, beispielsweise indem das Verbundelement 3 das Einlegeteil 1 klammerförmig oder C-förmig hintergreift, was mit gestrichelten dargestellten Klammerabschnitten 3.1 dargestellt ist. Selbstverständlich kann das Verbundelement 3 auch auf andere Weise als dargestellt mit dem Einlegeteil 1 verankert sein. Durch den zusätzlichen Formschluss kann das Spritzgussteil stärker vorgespannt werden als bei einer rein stoffschlüssigen Verbindung, so dass auch bei sehr hohen mechanischen und/oder thermischen Belastungen eine Dichtheit gewährleistet ist.

Fig.5 zeigt eine dreidimensionale Ansicht eines erfindungsgemäßen zylinderförmigen Spritzgussteils.

Bei dem Spritzgussteil nach Fig.5 sind die gegenüber dem Spritzgussteil nach Fig.1 bis Fig.4 gleichbleibenden oder gleichwirkenden Teile durch die gleichen Bezugszeichen gekennzeichnet.

Bei einem beispielsweise zylinderförmigen Einlegeteil 1 ist die Erhöhung 8 ringförmig umlaufend ausgeführt.

Zusätzlich zur stoffschlüssigen Verbindung kann eine formschlüssige Verbindung von Einlegeteil 1 und Verbundelement 3 vorgesehen sein, beispielsweise indem das Verbundelement 3 das Einlegeteil 1 klammerförmig, C-förmig oder ankerförmig hintergreift, was mit gestrichelten dargestellten Klammerabschnitten 3.1 dargestellt ist. Selbstverständlich kann das Verbundelement 3 auch auf andere Weise als dargestellt mit dem Einlegeteil 1 verankert sein.

Zum Erreichen einer fluiddichten Verbindung zwischen dem Einlegeteil 1 und dem Verbundelement 3 reicht eine einzige ringförmig umlaufende Erhöhung 8 aus, so dass nur wenig Bauraum zum Erreichen der Stoffschlüssigkeit benötigt wird.

## Patentansprüche

1. Verfahren zur Herstellung eines Spritzgussteils bestehend aus mindestens einem thermoplastischen Einlegeteil (1) und einem auf das Einlegeteil (1) gespritzten thermoplastischen Verbundelement (3), wobei das zumindest eine Einlegeteil (1) an seiner Grenzfläche zum Verbundelement (3) zumindest eine Erhöhung (8) zur stoffschlüssigen Abdichtung zwischen dem Einlegeteil (1) und dem Verbundelement (3) aufweist, die mit einer Höhe H1 in das Verbundelement (3) hineinragt und einen verengten Querschnitt im Verbundelement (3) mit einer Höhe H2 bildet, **dadurch gekennzeichnet, dass** die zumindest eine Erhöhung (8) auf ihrer Schmelzflussanströmseite (11) eine erste Schräge (12) aufweist, wobei das Verhältnis der Höhe (H2) des verengten Querschnitts (10) zur Höhe (H1) der Erhöhung (8) im Bereich zwischen 0,6 und 0,9 liegt, wobei in Schmelzflussrichtung (9) gesehen nur eine einzige Erhöhung (8) vorgesehen ist.

2. Verfahren nach Anspruch 1, **dadurch gekennzeichnet, dass** die erste Schräge (12) der Erhöhung (8) gegenüber einer auf der Grenzfläche des Einlegeteils (1) senkrecht stehenden Achse (15) einen Winkel zwischen 5 Grad und 45 Grad aufweist.

3. Verfahren nach Anspruch 1, **dadurch gekennzeichnet, dass** die erste Schräge (12) der Erhöhung (8) gegenüber einer auf der Grenzfläche des Einlegeteils (1) senkrecht stehenden Achse (15) einen Winkel zwischen 15 Grad und 35 Grad aufweist.

4. Verfahren nach Anspruch 1, **dadurch gekennzeichnet, dass** die Erhöhung (8) auf ihrer Schmelzflussabströmseite (16) eine zweite Schräge (17) aufweist.

5. Verfahren nach Anspruch 4, **dadurch gekennzeichnet, dass** die zweite Schräge (17) flacher verläuft als die erste Schräge (12).

6. Verfahren nach Anspruch 4, **dadurch gekennzeichnet, dass** die zweite Schräge (17) der Erhöhung (8) gegenüber einer auf der Grenzfläche des Einlegeteils (1) senkrecht stehenden Achse (15) einen Winkel zwischen 50 Grad und 75 Grad aufweist.

7. Verfahren nach Anspruch 1, **dadurch gekennzeichnet, dass** das Einlegeteil (1) aus einem ersten Kunststoff und das Verbundelement (3) aus einem zweiten Kunststoff hergestellt ist, wobei der erste Kunststoff und/oder der zweite Kunststoff einen kristallinen Anteil von mindestens 35% aufweisen.

8. Verfahren nach Anspruch 1, **dadurch gekennzeichnet, dass** das Verbundelement (3) über einen Klammerabschnitt (3.1) formschlüssig mit dem Einlegeteil (1) verbunden ist.

## Claims

1. Method for producing an injection-moulded part consisting of at least one thermoplastic inlay part (1) and a thermoplastic composite element (3) injection-moulded onto the inlay part (1), the at least one inlay part (1) having at its boundary surface with respect to the composite element (3) at least one raised portion (8) for creating a bonding seal between the inlay part (1) and the composite element (3), which raised portion protrudes into the composite element (3) with a height H1 and forms in the composite element (3) a narrowed cross section with a height H2, **characterized in that** the at least one raised portion (8) has on its melt inflow side (11) a first bevel (12), the ratio of the height (H2) of the narrowed cross section (10) to the height (H1) of the raised portion (8) lying in the range between 0.6 and 0.9, only a single raised portion (8) being provided as seen in the direction of melt flow (9).

2. Method according to Claim 1, **characterized in that** the first bevel (12) of the raised portion (8) has an angle of between 5 degrees and 45 degrees with respect to an axis (15) perpendicular to the boundary surface of the inlay part (1).

3. Method according to Claim 1, **characterized in that** the first bevel (12) of the raised portion (8) has an angle of between 15 degrees and 35 degrees with respect to an axis (15) perpendicular to the boundary surface of the inlay part (1).

4. Method according to Claim 1, **characterized in that** the raised portion (8) has a second bevel (17) on its melt outflow side (16).

5. Method according to Claim 4, **characterized in that** the second bevel (17) has a flatter profile than the first bevel (12).

6. Method according to Claim 4, **characterized in that** the second bevel (17) of the raised portion (8) has an angle of between 50 degrees and 75 degrees with respect to an axis (15) perpendicular to the boundary surface of the inlay part (1).

7. Method according to Claim 1, **characterized in that** the inlay part (1) is produced from a first plastic and the composite element (3) is produced from a second plastic, the first plastic and/or the second plastic having a crystalline fraction of at least 35%.

8. Method according to Claim 1, **characterized in that** the composite element (3) is connected to the inlay part (1) in an interlocking manner by way of a clamp portion (3.1).

## Revendications

1. Procédé de fabrication d'une pièce moulée par injection constituée d'au moins une pièce d'insertion thermoplastique (1) et d'un élément de connexion thermoplastique (3) pulvérisé sur la pièce d'insertion (1), l'au moins une pièce d'insertion (1) présentant, au niveau de sa surface de jonction avec l'élément de connexion (3), au moins un rehaussement (8) pour l'étanchéité par liaison de matière entre la pièce d'insertion (1) et l'élément de connexion (3), lequel rehaussement pénètre avec une hauteur H1 dans l'élément de connexion (3) et forme une section transversale rétrécie dans l'élément de connexion (3) ayant une hauteur H2, **caractérisé en ce que** l'au moins un rehaussement (8) présente, sur son côté d'afflux du flux de matière en fusion (11), un premier biseau (12), le rapport de la hauteur (H2) de la section transversale rétrécie (10) à la hauteur (H1) du rehaussement (8) étant compris dans une plage de 0,6 à 0,9, seulement un rehaussement unique (8) étant prévu vu dans la direction du flux de matière en fusion (9).

2. Procédé selon la revendication 1, **caractérisé en ce que** le premier biseau (12) du rehaussement (8) présente, par rapport à un axe (15) perpendiculaire à la surface de jonction de la pièce d'insertion (1), un angle compris entre 5 degrés et 45 degrés.

3. Procédé selon la revendication 1, **caractérisé en ce que** le premier biseau (12) du rehaussement (8) présente, par rapport à un axe (15) perpendiculaire à la surface de jonction de la pièce d'insertion (1), un angle compris entre 15 degrés et 35 degrés.

4. Procédé selon la revendication 1, **caractérisé en ce que** le rehaussement (8) présente un deuxième biseau (17) sur son côté de sortie du flux de matière en fusion (16).

5. Procédé selon la revendication 4, **caractérisé en ce que** le deuxième biseau (17) s'étend sous forme plus plate que le premier biseau (12).

6. Procédé selon la revendication 4, **caractérisé en ce que** le deuxième biseau (17) du rehaussement (8) présente, par rapport à un axe (15) perpendiculaire à la surface de jonction de la pièce d'insertion (1), un angle compris entre 50 degrés et 75 degrés.

7. Procédé selon la revendication 1, **caractérisé en ce que** la pièce d'insertion (1) est constituée d'un premier plastique et l'élément de connexion (3) est constitué d'un deuxième plastique, le premier plastique et/ou le deuxième plastique présentant une proportion cristalline d'au moins 35 %.

8. Procédé selon la revendication 1, **caractérisé en ce que** l'élément de jonction (3) est connecté par engagement par correspondance géométrique avec la pièce d'insertion (1) par le biais d'une portion de pince (3.1).
